# EUROPÄISCHE PATENTANMELDUNG

(11) **EP 0 945 059 A1**
(43) Veröffentlichungstag der Anmeldung: **29.09.1999**
(21) Anmeldenummer: 99102136.1
(22) Anmeldetag: 03.02.1999
(51) Int. Cl.: A01K 1/02

(54) **Tierkäfig, insbesondere zur Haltung von Sauen**

(30) Priorität: 25.03.1998 DE 19813034
(71) Anmelder: Duräumat Stalleinrichtungen GmbH & Co. KG, 23858 Reinfeld (DE)
(72) Erfinder: Vieregge, Claus-Jürgen Dipl.-Ing., 23848 Rümpel (DE)
(74) Vertreter: Fleck, Thomas, Dr. Dipl.-Chem.

(57) **Zusammenfassung**

Die Erfindung betrifft einen Tierkäfig, insbesondere zur Haltung von Sauen, mit Seitengittern (1,2), welche eine Umzäunung bilden, sowie eine Öffnung (20) mit zwei Buchtentüren (6), die über Türhängen (3,4) mit den Seitengittern (1,2) verbunden sind, und jeweils um vertikale Achsen (XX) derart drehbar sind, daß sie einerseits eine Öffnungsstellung und andererseits eine Schließstellung einnehmen, in der sie sich in der Ebene der Öffnung (20) befinden, um dieselbe abzusperren. Nachteilig hat sich beim Stand der Technik bemerkbar gemacht, daß sich die Buchtentüren nur nach innen öffnen lassen und eine evtl. Einhandbedienung eine relativ hohe Verletzungsgefahr für das Bedienungspersonal mit sich bringt. Die Erfindung schafft hier Abhilfe dadurch, daß die Türhängen (3,4) an ihrem Außenrand mehrere Arretierungsaussparungen (21) besitzen, in die zum arretierenden Eingriff in der gewünschten Position jeweils ein Türhaken (7) vorgesehen ist,
und daß die Buchtentüren (6) anhebbar sind und einen Bedienhebel (8) zur Einhandbedienung aufweisen, der in einer Buchse (13) in einer Trägerschiene (10) gegen die Vorspannung einer Feder (9) drehbar gelagert ist, wobei sein unteres Ende abgewinkelt ist und durch eine Bohrung (12) in der Buchtentür (6) hindurchverläuft, und daß ein Sperrstift (11) in der Trägerschiene (10) zum Verhindern des Herausfallens der Buchtentür aus der oberen Türhänge (3) vorgesehen ist.

## Beschreibung

Die Erfindung betrifft einen Tierkäfig, insbesondere zur Haltung von Sauen oder Schweinen nach dem Oberbegriff des Anspruches 1.

Ein derartiger Tierkäfig ist aus der EP-B1-0562 991 bekannt. Nachteilig macht sich bei diesem vorbekannten Tierkäfig bemerkbar, daß die Buchtentüren nur nach innen geöffnet werden können. Auch ist unter ungünstigen Voraussetzungen eine Einhandbedienung möglich, jedoch stellt die Anordnung der Verriegelung eine relativ hohe Verletzungsgefahr für das Bedienungspersonal dar, da sich die Finger zwischen dem Verriegelungsarm und dem Gitter leicht verklemmen können.

Der Erfindung liegt deshalb die Aufgabe zugrunde, den eingangs genannten Tierkäfig derart zu verbessern, daß eine einfache und schnelle Einhandbetätigung der Buchtentüren ermöglicht wird, ohne daß das Bedienungspersonal einer Verletzungsgefahr ausgesetzt wird. Auch sollte ein Entriegeln und/oder Öffnen der Buchtentür nach innen und außen möglich sein.

Diese Aufgabe wird in überraschender Weise dadurch gelöst, daS die Türhängen an ihrem Außenrand mehrere Arretierungsaussparungen besitzen, in die zum arretierenden Eingriff in der gewünschten Position jeweils ein Türhaken vorgesehen ist, und daS die Buchtentüren anhebbar sind und einen Bedienhebel zur Einhandbedienung aufweisen, der in einer Buchse in einer Trägerschiene gegen die Vorspannung einer Feder drehbar gelagert ist, wobei sein unteres Ende abgewinkelt ist und durch eine Bohrung in der Buchtentür hindurchverläuft, und daß ein Sperrstift in der Trägerschiene 10 zum Verhindern des Herausfallens der Buchtentür aus der oberen Türhänge vorgesehen ist.

Weitere Vorteile und Merkmale, die auch von erfindungsgemäßer Bedeutung mit dem Hauptanspruch sein können, gehen aus den Unteransprüchen hervor.

Im folgenden wird ein bevorzugtes Ausführungsbeispiel der Erfindung anhand der Zeichnung näher erläutert.

Es zeigt:
- Fig. 1: eine schematische Querschnittsansicht durch einen erfindungsgemäßen Tierkäfig bzw. Sauenbucht; und
- Fig. 2: eine Draufsicht auf die in Fig. 1 dargestellte Sauenbucht, die im Anschnitt gezeigt ist.
- Fig. 3: eine Draufsicht auf zwei einzelne halbe Türhänge, die nach Einsetzen des Seitengitters miteinander zur Doppeltürhänge verschraubt werden.

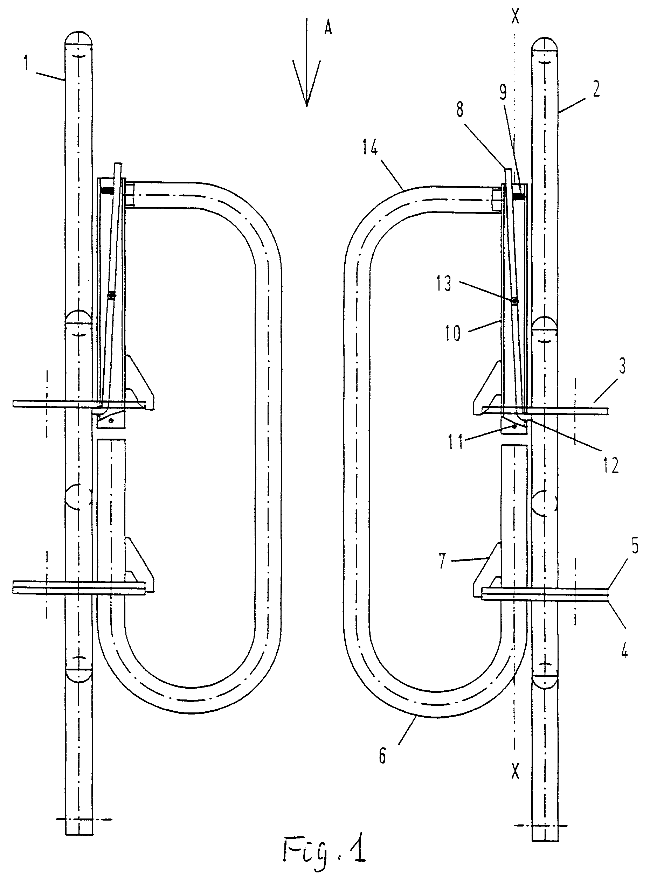

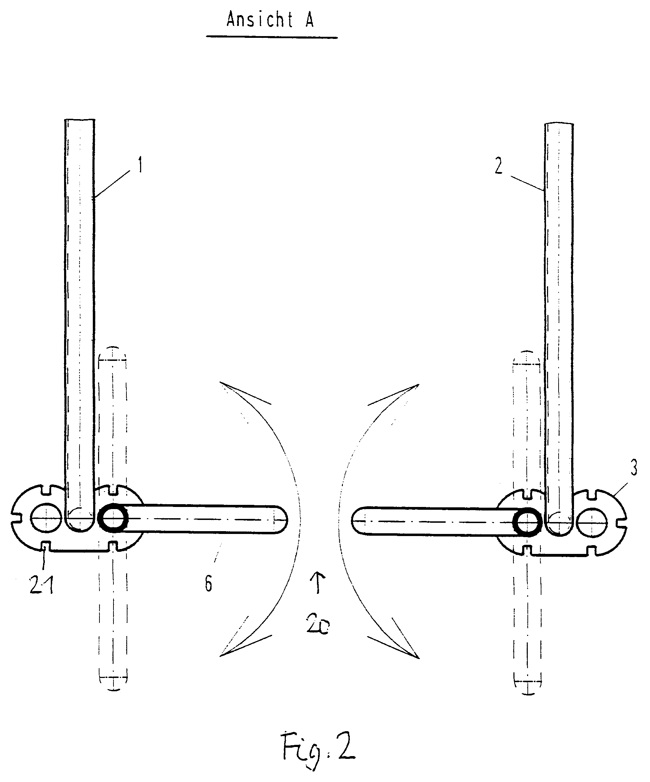

Der erfindungsgemäße "Tierkäfig" wird beispielsgemäß als Einrichtung zur Haltung von Sauen in Einzelständen dargestellt. Senkrechte Seitengitter 1,2 sind vorgesehen, an denen Doppeltürhänge 3,4 in etwa in mittiger Höhe, beabstandet voneinander, befestigt sind. An diesen Türhängen sind die Buchtentüren 6 befestigt. Diese Buchtentüren 6 sind hinsichtlich ihrer Abmessungen so voneinander beabstandet, daS weder das Bedienungspersonal, noch die Säue im geschlossenen Zustand hindurchtreten können. Ebenfalls weisen sie eine solche Höhe auf, daß weder die Tiere, noch das Bedienungspersonal über die Buchtentüren hinwegsteigen oder darunter hindurchkriechen können. Der geschlossene Zustand ist in den Fig. 1 und 2 in durchgezogenen Linien dargestellt, während in Fig. 2 zusätzlich in gestrichelten Linien der geöffnete Zustand der Buchtentüren 6 dargestellt ist, die sich sowohl nach innen als auch nach außen öffnen lassen, wie dieses durch die Doppelpfeile angedeutet wird. An den Buchtentüren 6 ist im Bereich der Türhänge 3,4 jeweils ein Türhaken 7 angebracht. Der Außenrand der Doppeltürhänge 3,4 ist mit Arretierungsaussparungen 21 versehen. Im gezeigten Beispiel weist jede Doppeltürhänge 3,4 derartige Arretierungsaussparungen auf, von denen jeweils drei im 90°-Winkel angeordnet sind. Es dürfte jedoch einleuchten, daß auch ein anderer Winkel gewählt werden kann. In diese Aussparungen 21 faßt bei der unteren und der oberen Türhänge 3,4 der Türhaken 7 ein und arretiert somit die Buchtentür 6 in der jeweiligen Position. Wird die Buchtentür 6 angehoben, läßt sie sich in der gestrichelt dargestellten XX-Achse drehen. Je nach Anordnung der Aussparung 21 ist somit eine Arretierung der Buchtentür 6 in mehreren Positionen möglich, z.B. kann die Buchtentür 6 geschlossen, nach innen oder nach außen geöffnet werden, wie dieses in Fig. 2 dargestellt ist.

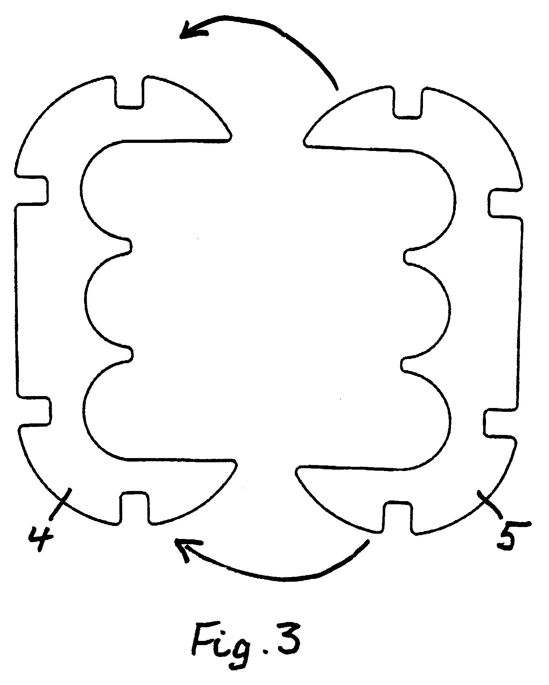

Um ein Anheben und Entriegeln der Buchtentür 6 durch die Sauen zu verhindern, ist in der Buchtentür 6 ein Bedienungshebel 8 angebracht, der in der Buchse 13 in der Buchtentür 6 drehbar gelagert ist. Das untere Ende des Bedienungshebels 8 ist abgewinkelt und verläuft durch die Bohrung 12 in der Buchtentür 6 unter der Doppeltürhänge 3 hindurch. Durch die Feder 9 wird der Bedienungshebel 8 in dieser Position gehalten. Zum Drehen der Tür erfaßt das Bedienungspersonal die Buchtentür 6 im oberen Bereich 14 und drückt mit dem Daumen (nicht gezeigt) den Bedienungshebel 8. Die Tür 6 kann somit mit einer Hand leicht und schnell angehoben und in die gewünschte Position gedreht werden. Beim Eintreten oder Austreten aus der Bucht bleibt es also dem Bedienungspersonal überlassen, die Buchtentür 6 vorwärts zu drücken oder rückwärts zu ziehen. Der Sperrstift 11 verhindert, daß die Buchtentür 6 zu weit angehoben wird, und somit aus der oberen Türhänge 3 herausfällt. Die untere Buchtentüraufhängung besteht aus der am Seitengitter 2 angeschweißten oberen Türhänge 4 (siehe Fig. 3), sowie dem daruntergeschraubten Hängeteil 5. Diese Ausführung erlaubt eine sehr einfache Montage der Buchtentüren 6.

## Patentansprüche

1. Tierkäfig, insbesondere zur Haltung von Sauen, mit Seitengittern (1,2), welche eine Umzäunung bilden, sowie eine Öffnung (20) mit zwei Buchtentüren (6), die über Türhängen (3,4) mit den Seitengittern (1,2) verbunden sind, und jeweils um vertikale Achsen (XX) derart drehbar sind, daß sie einerseits eine Öffnungsstellung und andererseits eine Schließstellung einnehmen, in der sie sich in der Ebene der Öffnung (20) befinden, um dieselbe abzusperren,
dadurch gekennzeichnet, daß
die Türhängen (3,4) an ihrem Außenrand mehrere Arretierungsaussparungen (21) besitzen, in die zum arretierenden Eingriff in der gewünschten Position jeweils ein Türhaken (7) vorgesehen ist,
und daß die Buchtentüren (6) anhebbar sind und einen Bedienhebel (8) zur Einhandbedienung aufweisen, der in einer Buchse (13) in einer Trägerschiene (10) gegen die Vorspannung einer Feder (9) drehbar gelagert ist, wobei sein unteres Ende abgewinkelt ist und durch eine Bohrung (12) in der Buchtentür (6) hindurchverläuft, und daß ein Sperrstift (11) in der Trägerschiene (10) zum Verhindern des Herausfallens der Buchtentür aus der oberen Türhänge (3) vorgesehen ist.

2. Tierkäfig nach Anspruch 1, dadurch gekennzeichnet, daß die Türhänge (4) am Seitengitter (2) angeschweißt, und die untere Türhänge (5) teilweise überlappend an die Türhänge (4) angeschraubt ist.

3. Tierkäfig nach Anspruch 1 oder 2, dadurch gekennzeichnet, daß jede Doppeltürhänge (3,4) Arretieraussparungen besitzt, von denen jeweils drei im 90°-Winkel beabstandet sind.
